# EUROPEAN PATENT SPECIFICATION

(11) **EP 1 880 795 B1**
(45) Date of publication and mention of the grant of the patent: **19.11.2008**
(21) Application number: 06425500.3
(22) Date of filing: 19.07.2006
(51) Int. Cl.: B23P 19/04, B23P 21/00, B23Q 7/14, B23Q 1/48

(54) **Cell for automated assembling operations**
Zelle für automatisierte Montagevorgängen
Cellule pour opérations d'assemblage automatiques

(43) Date of publication of application: 23.01.2008
(73) Proprietor: COMAU S.p.A., 10095 Grugliasco (Torino) (IT)
(72) Inventor: Migliore, Luigi c/o Comau S.p.A., 10095 Grugliasco (Torino) (IT)
(74) Representative: Notaro, Giancarlo

(56) References cited:
- EP-A1- 0 496 995
- EP-A2- 0 708 229
- FR-A1- 2 557 070
- FR-A1- 2 723 019
- JP-A- 1 097 535
- JP-A- 2000 126 943
- JP-A- 2000 271 825
- US-A- 4 879 795

## Description

The present invention relates to cells for automated assembly operations, for example, for the assembly of engines or transmission units for motor vehicles and in particular for the assembly of multicylinder internal-combustion engines. The invention relates to an assembly cell of the type comprising: a fixed supporting structure, defining an assembly station; a conveying device for feeding a piece, such as for example, a cylinder head, to the assembly station for the purpose of assembling thereon one or more accessory elements, and for sending the piece out of the assembly station once the assembly operations are completed; means for referencing in position and supporting the piece in the assembly station during execution of the assembly operations; and manipulator means mounted mobile on the supporting structure, for execution of the aforesaid assembly operations on the piece that is in the assembly station.

An automated assembly cell according to the preamble of claim 1 is disclosed in JP 2000 271825 A.

The purpose of the present invention is to provide an assembly cell of the type referred to above that is characterized by a high operating flexibility. A particularly preferred purpose of the present invention is to provide a cell that is adaptable to operate on engines of different types, and in particular ones having, for example, different positions and orientations of the parts to be assembled on the engine.

A further purpose of the invention is to provide an assembly cell that will moreover enable the possibility of being highly suited for providing the different assembly stations along a complete assembly line.

In conclusion, one of the main tasks of the invention is to propose a cell for automated assembly operations for parts of internal-combustion engines that will allow the designer of the assembly plant the maximum freedom and flexibility in the construction of the assembly plant, with the possibility of re-using and adapting the assembly cells pre-arranged for a given type of engine in order to enable production of a new type of engine.

With a view to achieving the above purposes, the subject of the invention is a cell for automated assembly operations having all the characteristics according to claim 1.

Thanks to the aforesaid characteristics, it is possible to pre-arrange the automated cell for enabling assembly, for example, on engines having different geometries, in particular having different positioning and orientation of the parts to be assembled on the engine.

Furthermore, in the preferred embodiment, said manipulator means are designed for simultaneous assembly of a plurality of elements on said piece and are adjustable for varying the distance between the positions of said elements.

Preferably, the assembly cell is dedicated to assembly of parts of multicylinder internal-combustion engines, and is moreover characterized in that said manipulator means are designed for simultaneous assembly of elements associated to the different cylinders of the engine and are adjustable so as to be able to operate on components of engines having different values of the distance between centres of the cylinders.

Thanks to the aforesaid characteristic, the cell for automated assembly operations according to the invention is able to operate on a series of different types of engine. This enables both adaptation of the cell for carrying out a given assembly operation, such as, for example, assembly of the engine valves on a new type of engine, whenever it is decided to pass from the production of an old type of engine to the production of the new type and adaptation of one and the same type of cell for automated assembly operations to provide different stations in an automated assembly line.

In the preferred embodiment, the aforesaid manipulator means comprise a plurality of gripping members supported by a structure that can be displaced in a controlled way according to a vertical axis and a horizontal axis orthogonal to the longitudinal direction of a line for conveying the pieces through the assembly cell. Said gripping members are carried by the supporting structure so that the distance between them can be adjusted.

Further advantageous characteristics of the invention will emerge from the ensuing description with reference to the annexed plate of drawings, which is provided purely by way of non-limiting example and in which:
- Figure 1 is a perspective view of a cell for automated assembly operations according to a preferred embodiment of the present invention;
- Figure 2 is an exploded perspective view of some parts of the cell illustrated in Figure 1;
- Figure 3 is a perspective view at an enlarged scale of a component of the cell of Figure 1;
- Figure 4 illustrates, in perspective view, the component of Figure 3 in a different operating condition;
- Figures 5 and 6 are perspective views at an enlarged scale that illustrate further details of the component of Figures 3 and 4;
- Figures 7 and 8 illustrate, in perspective view, a further component of the cell of Figure 1 in two different operating conditions; and
- Figures 9-12 are perspective views of a further component of the cell for automated assembly operations of Figure 1, in different operating conditions.

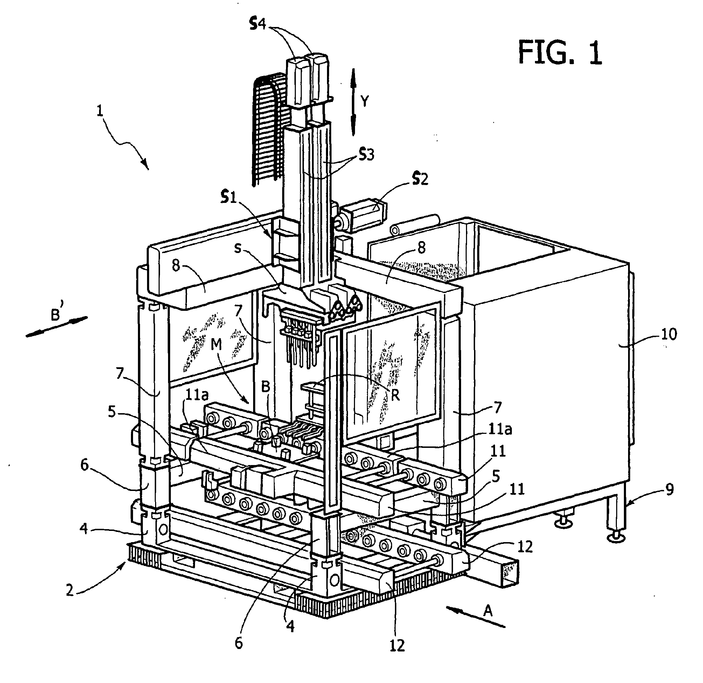

With reference to Figure 1, number 1 designates as a whole a cell for automated assembly of parts of internal-combustion engines. For example, the cell 1 can be used for automatic installation, on a cylinder head of an internal-combustion engine, of parts, such as engine valves, cups associated to the engine valves, springs associated to the engine valves, cotters associated to the engine valves, and tappets for actuation of the valves. According to the invention, basically the same assembly cell can be used for carrying out one or more of the aforesaid operations. This means, on the one hand, that a given cell can be adapted for operating in a different way over time and, on the other hand, that a complete line for automated assembly can be provided, in which the different operations of the cycle for assembly of a cylinder head are performed using a plurality of assembly cells of the type forming the subject of the invention, which are thus to constitute a standard component adaptable, as required, to the specific needs of the assembly cycle.

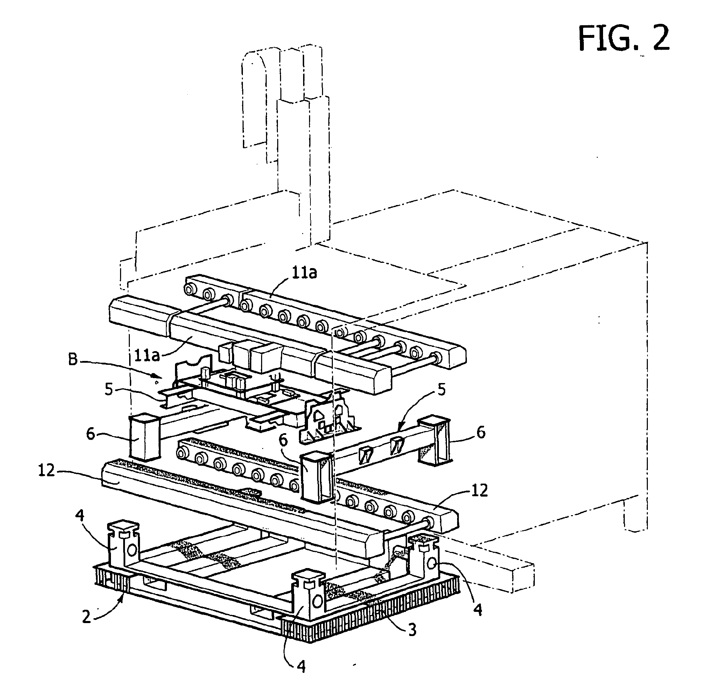

In the example of embodiment illustrated in Figure 1, the cell 1 comprises a base structure 2, which is even more clearly visible in the exploded view of Figure 2. The base structure 2 includes a bed plate 3 for resting on the floor, at the vertices of which four supporting blocks 4 are provided. Said blocks function in twos as supports for a cross member 5 welded at the ends to two blocks 6, which are to rest on the respective blocks 4 and to constitute a prolongation of these upwards.

Rising above the blocks 6 are respective columns 7, which are connected at the top by cross members 8. Anchored at the rear to the framework thus defined is a supporting structure 9 for a cabinet 10, which contains the electronic control equipment and various auxiliary services associated to the cell 1.

The cross members 5 support the horizontal beams 11 of the top branch of a conveying device with motor-driven rollers for the movement of pallets (not illustrated) that are to carry the pieces to be machined, for example, the cylinder heads, in succession within the assembly cell 1. In Figure 1, the arrow A indicates the direction of movement of the conveying line, which is orthogonal to the direction of the cross members 5 and which carries in succession the pallets, with the cylinder heads arranged thereon, to an assembly station set within the cell 1, designated as a whole by M. The same conveying device then sees to conveying a piece, for example a cylinder head, after completion of the cycle of operations in the cell 1, out of the cell, towards subsequent stations of the assembly line. In the case of the example illustrated, the conveying device has a top branch for movement of the pallets carrying the cylinder heads, and a bottom branch, defined by longitudinal supporting beams 12, for return of the empty pallets towards the end upstream of the conveying device. Each of the pallets that are mobile along the top branch of the conveying device receives in fact a piece, for example, a cylinder head, at the end upstream of the conveying device, and the cylinder head carried thereon is unloaded when it reaches the final end of the conveying device, after which the same pallet is brought back to the end upstream, where it can receive a new cylinder head, causing it to traverse the bottom branch of the conveying device in the direction opposite to the direction of movement along the top branch. As may be seen in Figure 1, the longitudinal supporting beams 12 of the bottom branch of the conveyor rest directly on the base plate 2. Both the top branch and the bottom branch have motor-driven rollers, carried by the respective longitudinal beams 11, 12 in order to convey by friction a pallet resting thereon.

When a pallet bearing a cylinder head that is to undergo the cycle of assembly operations envisaged within the assembly cell 1 reaches the assembly station M, a base fixture B, provided in the assembly station M, takes it up, raising it from resting on the motor-driven rollers of the conveying device and references it in position and keeps it clamped during execution of the assembly operations.

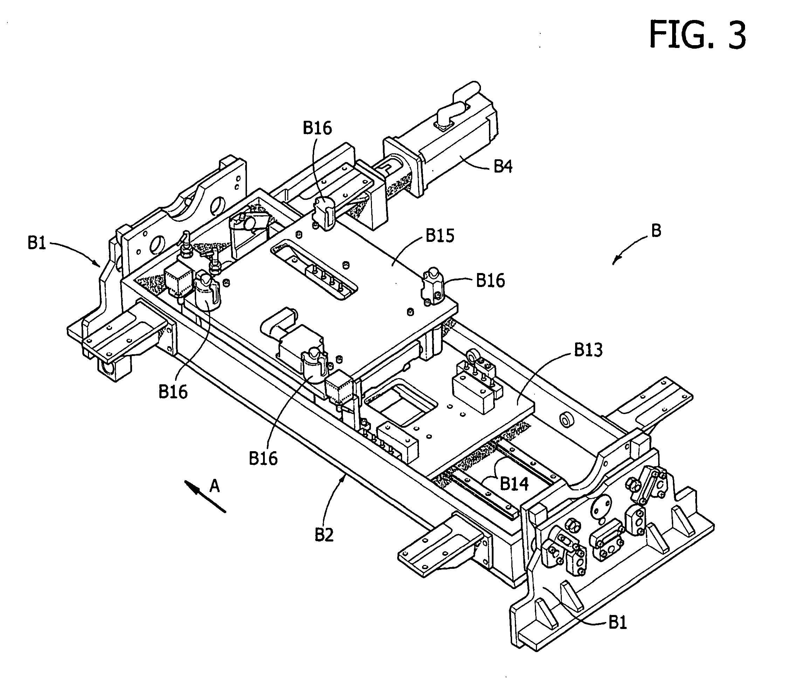

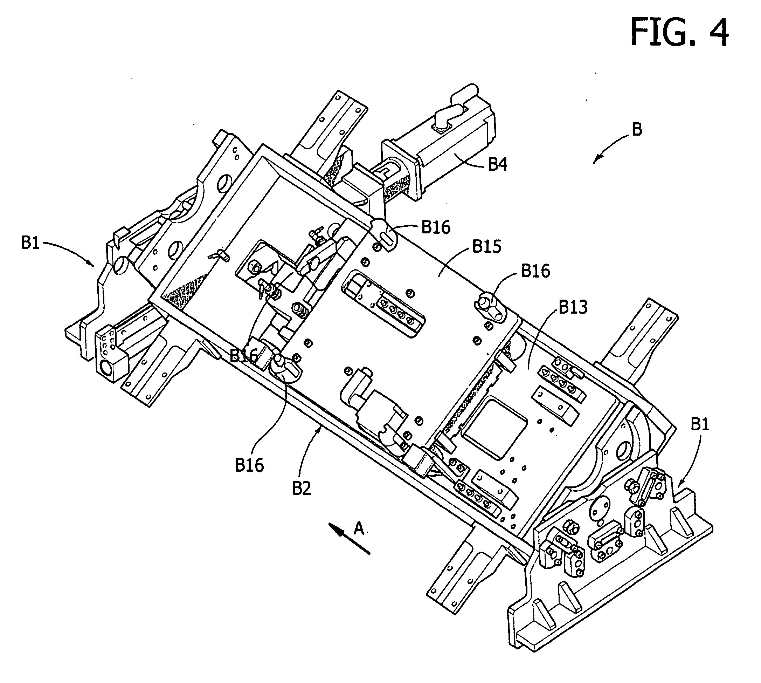

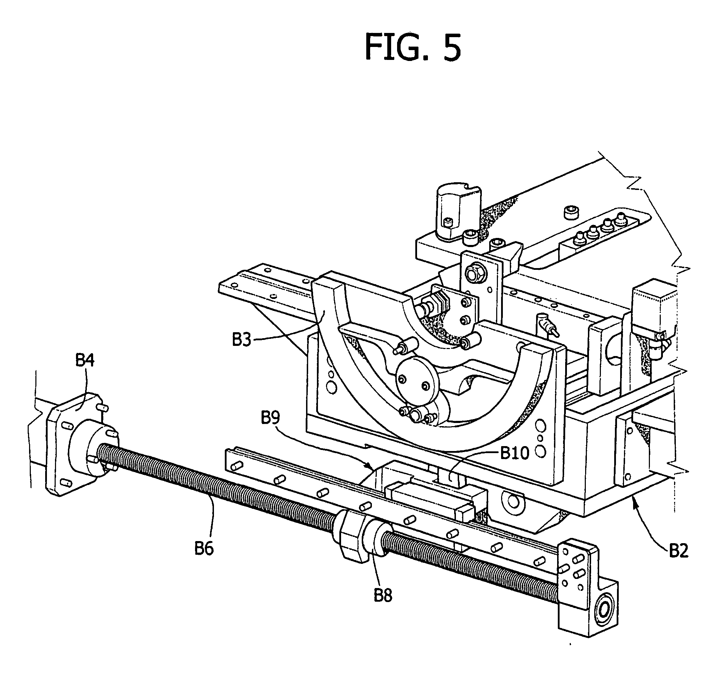

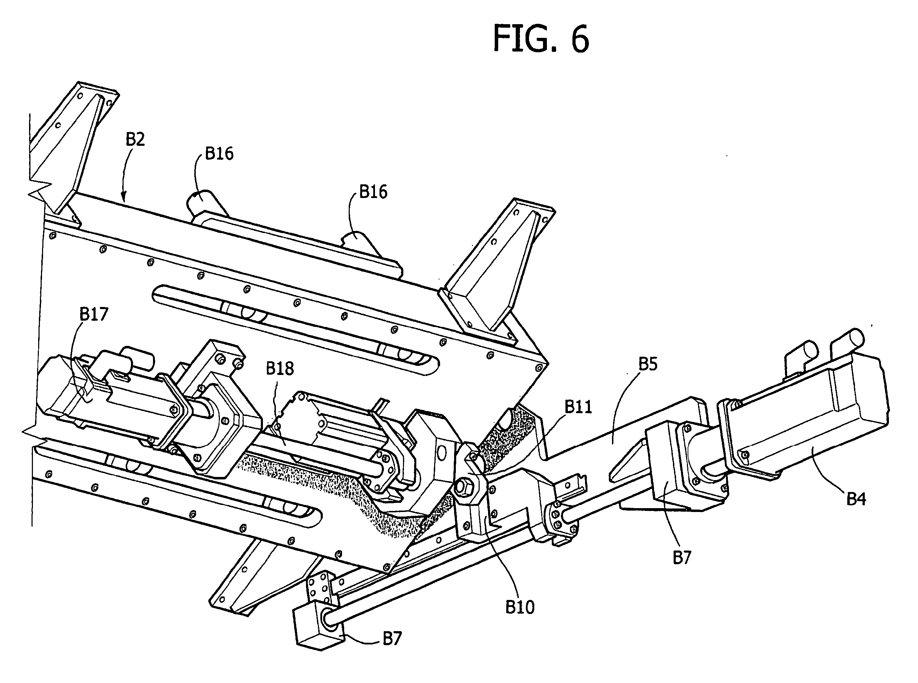

The aforesaid base fixture B is illustrated at an enlarged scale in Figures 3-6. Basically, it comprises two end supports B1 substantially shaped like vertical plates, which are arranged orthogonal to the longitudinal direction A and are provided with base flanges for fastening them to the fixed supporting structure of the cell. The two plates B1 function as supports for the oscillating mounting of a box-like structure B2 about a longitudinal axis. Said mounting is obtained by providing, at each end of the structure B2, a ribbing shaped like the arc of a circle B3 that is guided between rollers, carried by the ends of the box B2 and designed to engage the inner side and the outer side of said ribbing B3. In this way, the box-like structure B2 can oscillate with respect to the end plates B1 about an axis parallel to the longitudinal direction A. Said movement of oscillation is controlled by an electric motor B4 (see Figures 4, 5 and 6), the structure of which is supported by an appendage B5 of one of the end plates B1 and has its output shaft that governs a screw B6 (Figure 5). The screw B6 is supported in a rotating way by supports B7, carried by the aforesaid plate appendage B5 (Figure 6), and is axially fixed. It engages within a lead nut B8 fixed to a moving element B9 (Figure 5). The moving element B9 has a vertical groove B10, within which a roller engages carried by a lever B11 (Figure 6), fixed to the box-like structure B2, so that activation of the electric motor B4 enables control of the angular position of the box-like structure B2 with respect to its axis of oscillation.

Furthermore, the box-like structure B2 supports a slide B13, guided on rails B14 (Figure 3), which are mounted on the bottom of the box-like structure B2, so that the slide B13 can slide in the longitudinal direction A.

The slide B13 in turn supports a faceplate B15 that is vertically mobile with respect to the slide B3 and is in particular raisable to take up thereon a pallet that has arrived in the assembly station with a cylinder head carried thereon. The faceplate B15 is provided with reference elements B16 for referencing the pallet in position thereon and for keeping it clamped. When a pallet reaches the assembly station, it brings about automatically raising of the plate B15 by means of a device provided for said purpose. Once the pallet is referenced and clamped on the plate B15, it can be varied in position in the direction A by causing a displacement of the slide B13. The position of the slide B13 is controlled by an electric motor B17 (Figure 6), provided underneath the box-like structure B2 and designed to govern a screw B18 engaged within a lead nut fixed to the slide B13.

Thanks to the aforesaid arrangement, and in particular to the conformation described above by the aforesaid base fixture B, once a pallet has been referenced in position and clamped in the assembly station within the assembly cell 1, it can be oriented about a longitudinal axis, so that, for example, a cylinder head carried on the pallet can be oriented so as to present one surface thereof bearing the seats for the parts to be assembled with the orientation best suited for convenient execution of the assembly operations. Furthermore, the position of the piece in the assembly station can be adjusted in the longitudinal direction A, according to the specific requirements of assembly and according to the characteristics of the piece.

To return to Figure 1, the elements to be assembled on the piece that is in the assembly station, such as for example, the engine valves to be assembled on a cylinder head that is in the assembly station are assembled using gripping tools, of a type in itself known, carried by a supporting structure S that is mobile above the assembly station M both in a horizontal direction B' orthogonal to the direction of the conveying line, and in a vertical direction Y. For this purpose, provided on a top cross member 8, set orthogonal to the direction of the conveying line, is a slide S1 mobile in the direction B'. The movement and the position of the slide S1 are controlled by an electric motor S2, which is supported by the fixed frame of the cell and has an output shaft, which governs in rotation a screw (not visible in the drawings) that is engaged within a lead nut fixed to the slide S1. In turn, the slide S1 supports in a mobile way in the vertical direction Y two coupled slides S3, mounted at the bottom ends of which is the supporting structure S of the gripping tools. In the example illustrated, two supporting structures S are envisaged, fixed to the bottom ends of the two coupled structures S, but obviously it would be possible to provide a single supporting structure S, fixed to a single vertical slide S3. Furthermore, each supporting structure S, instead of being fixed to the bottom end surface of the respective slide S3, could be fixed to the vertical side surface of the slide S3, once again adjacent to the bottom ends thereof. Said choice depends upon the orientation that it is desired to give to the set of gripping tools. The movement in the vertical direction of each slide S3 is controlled by a respective electric motor 4 having a screw that engages in an internal screw rigidly connected to the slide S1. The internal screw is then fixed with respect to the vertical direction, and the activation of an electric motor S4 brings about displacement in the vertical direction of the respective screw with respect to the internal screw. In other words, when an electric motor S4 is activated, the entire structure formed by the respective slide S3, with the screw associated thereto, and the structure of the respective electric motor S4 displaces vertically, whilst the lead nut is engaged by the screw, which remains vertically fixed and rigidly connected to the slide S1.

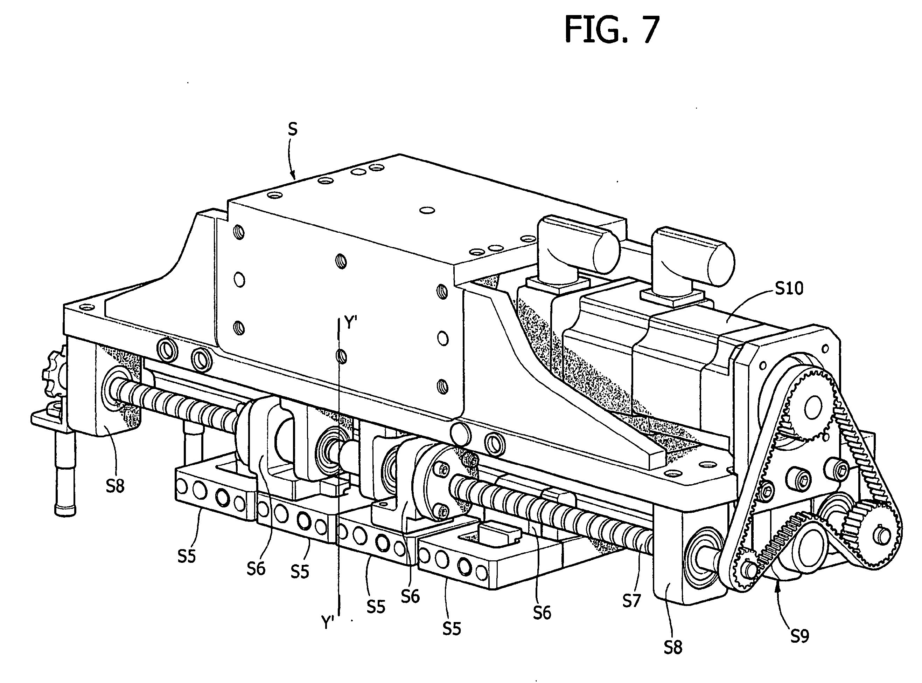

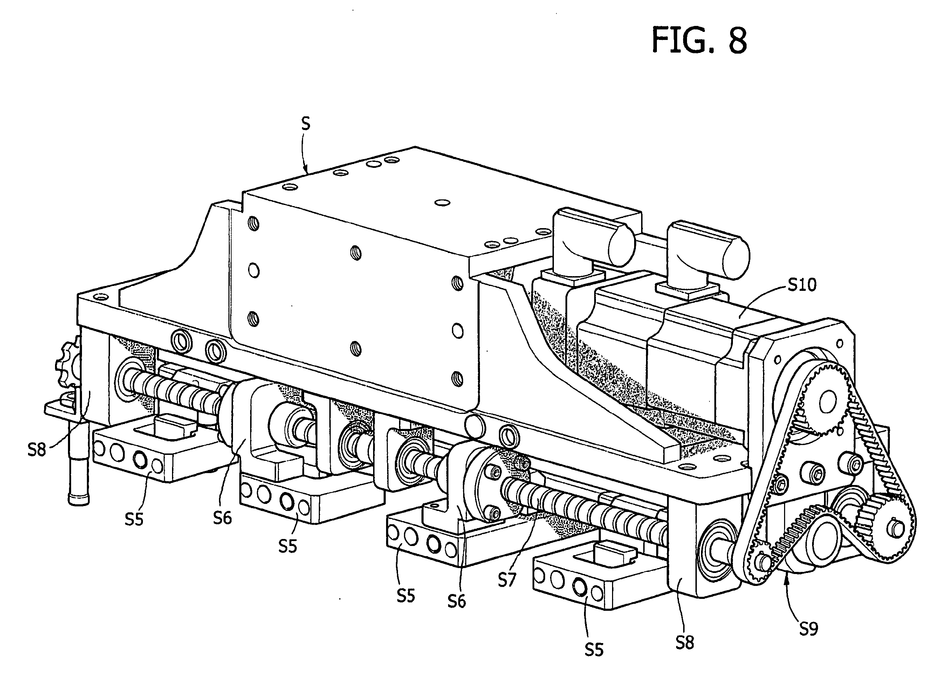

Figures 7 and 8 illustrate the group of the supporting structure S in two different operating conditions. The supporting structure S is provided with four plates S5, each of which is to carry a respective gripping tool. In the present description and in the annexed plate of drawings, the gripping tools are not described in so far as they can be made in any known way and do not fall, taken in themselves, within the scope of the present invention. Furthermore, the elimination of said constructional items from the drawings renders the latter more readily understandable. What is important to note for the purposes of the present invention is that the gripping tools (which are four in the example illustrated) are carried by four respective supporting plates S5 that can be positioned at different distances apart from one another, as may be seen from a comparison of Figure 7 with Figure 8. In other words, the supporting plates S5, which are carried by the supporting structure S and are to support the gripping tools, are adjustable at different distances apart from one another so that the equipment illustrated is able to carry out simultaneously assembly, for example, of the valves associated to the various cylinders on a cylinder head, for different dimensions of the cylinder head and in particular for different values of the distance between centres of the cylinders.

For this purpose, each of the supporting plates S5 is supported at each end by supports S6 bearing respective lead nuts. Said lead nuts are engaged by a screw S7, which is supported in a rotatable way by the supporting structure S by means of supports S8 and is driven in rotation by means of a toothed-belt drive S9 by a motor unit S10. With respect to a vertical median plane, the trace of which is designated by Y-Y in Figure 7, the screw S7 is divided into two parts having threads with opposite directions. Furthermore each of the two halves of the screw S7 is in turn made up of parts having different pitches, so that a rotation imparted on the screw S7 starting from the condition illustrated in Figure 7, in which the plates S5 for supporting the gripping members are brought up close to one another, brings about a progressive distancing of the four plates S5 from one another, with the outermost plates that move at a higher speed than the innermost plates so that at each instant four plates S5 are at the same distance apart from one another, up to a position of maximum distancing that corresponds to what is illustrated in Figure 8.

Thanks to the aforesaid characteristics, the cell according to the invention is able to be immediately adapted for operating on engines of different geometries or for carrying out different steps of the complete cycle of assembly of the cylinder head, according to the point of the assembly line in which it is provided. Once again thanks to said characteristic, it is consequently possible to pre-arrange a complete assembly line basically using cells that are substantially identical to one another and correspond to the teachings of the present invention.

To return again for a moment to Figure 1 of the annexed plate of drawings, the cell for automated assembly operations comprises also an assembly R provided with engagement members R1, which are to be pushed within the valve seats pre-arranged in the cylinder head to prevent the latter from falling out of the cylinder head until their assembly has been completed with the additional missing parts. Basically, then, the assembly R is able to carry a plurality of engagement members R1 to engage simultaneously corresponding parts of the cylinder head that is in the assembly station. In a way similar to what has been seen for the structure S for supporting the gripping members, also the engagement members R1 are provided so that their mutual distance is adjustable.

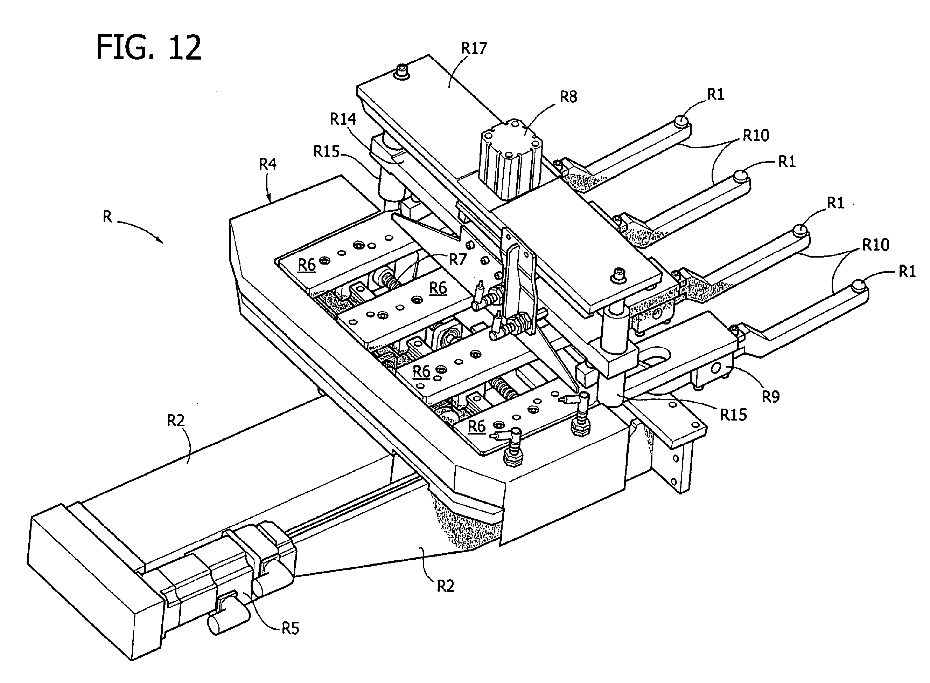

In the case of the specific example illustrated, the assembly R comprises a fixed supporting structure R2, which is fastened to the fixed frame of the assembly cell. The fixed supporting structure R2 defines guides R3, arranged horizontally and orthogonal to the longitudinal direction A, on which a bridge-like slide R4 is mounted. The movements of the slide R4 on the fixed structure R2 are controlled by an electric motor R5 (Figure 12), which sets in rotation a screw (not visible in the drawings), which engages an internal screw (not visible in the drawings), carried by the structure of the bridge-like slide R4.

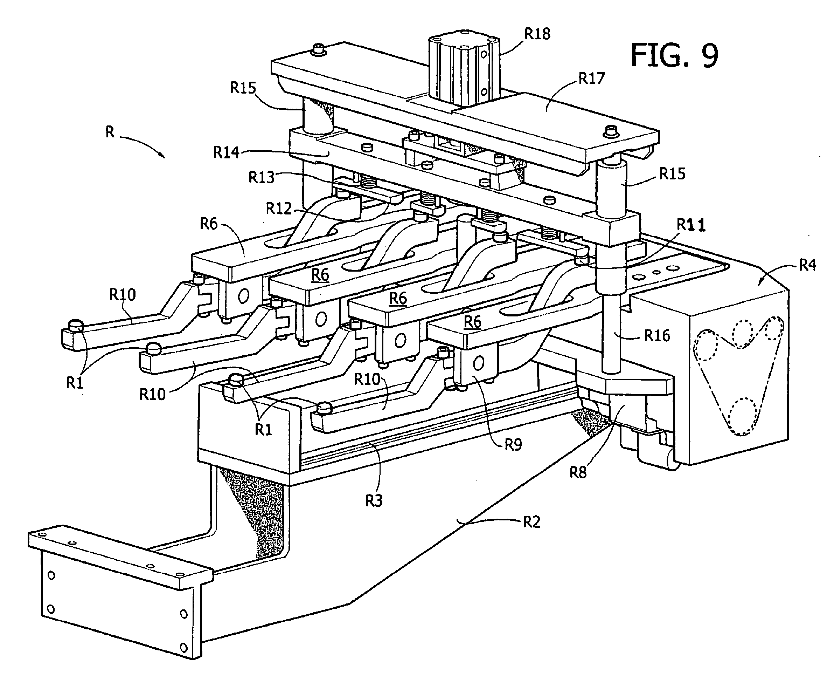

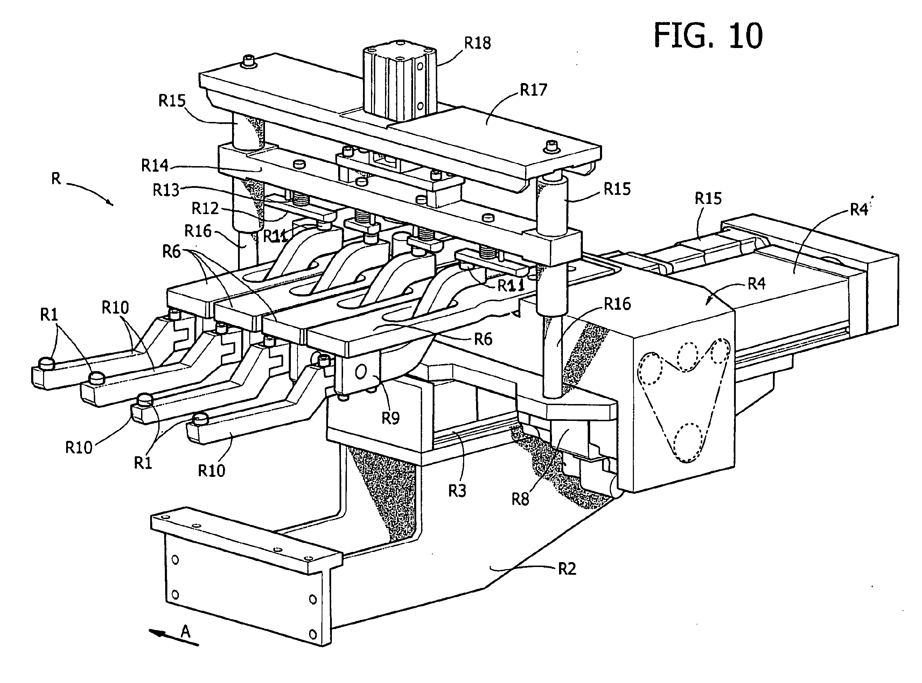

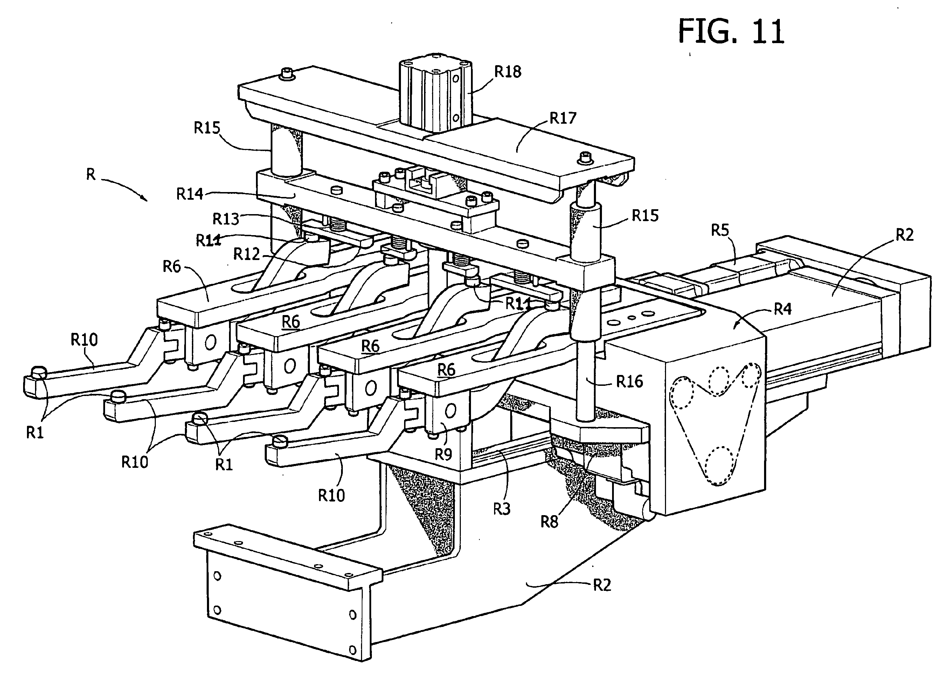

The bridge-like slide R4 supports four horizontal elongated and parallel plates R6 (see in particular Figure 12) in such a way as to enable a regulation of the distances between said plates. For this purpose, each of said plates is connected to a support including an internal screw that engages a transverse screw R7, which is controlled by means of a belt drive by a corresponding motor R8 (Figures 9-11). The screw R7 is altogether similar to the screw S7 described with reference to Figures 7 and 8. It is divided into two parts having threads with opposite directions, with each half of the screw that has threaded portions of different pitches so that a rotation imparted on the screw brings about a progressive distancing of the four plates R6, maintaining in any case one and the same distance between said plates. In this way, the plates R6 can be carried from the condition where they are set up alongside one another, illustrated in Figure 10, to the condition where they are spaced apart from one another, illustrated in Figure 9, so as to be adaptable to different engine geometries and in particular to engines with different distances between centres of the cylinders. The movement of the slide R4 is exploited to bring the assembly R from the retracted condition, illustrated in Figure 9, to an advanced condition, illustrated in Figures 10 and 11, where the engagement members R1 are provided for engaging the corresponding parts of the cylinder head.

Once again with reference to Figures 9-11, each of the plates R6 is provided, at the bottom, with a support R9, to which an arm R10 is articulated as a rocker. Each arm R10 has one end bearing the aforesaid engagement member R1 and the opposite end bearing a buffer R11 in contact with a pusher element R12. The pusher elements R12 have an elongated conformation in such a way as to ensure contact with the buffer R11 in the different positions of the arm R10 in the direction A, which can be selected by activating the motor R8. All the pushers R12 are constituted by plates, which are carried by means of springs R13 by a single cross member R14 that is mounted so that it can slide vertically via two vertical cylindrical bushings R15, which are fixed to the ends of the cross member R14, said ends being guided so that they can slide on two cylindrical columns R16 carried by the bridge-like slide R4. The columns R16 are connected, at their top ends, by a cross member R17 bearing a fluid cylinder R18, the stem of which governs a vertical displacement of the cross member R14. Starting from the condition illustrated in Figure 11, a lowering of the cross member R14 brings about a thrust downwards, exerted by the element R12 on the buffers R11 at the rear ends of the arms R10 so that the front engagement members R1 are displaced upwards into their operating position of engagement of the respective seats of the cylinder head.

Once again, thanks to the pre-arrangement of means that enable adjustment of the relative distance between the engagement members R1, which are to engage simultaneously on different portions of the piece that is in the assembly station, it is possible to adapt the assembly cell to operating on pieces of different geometry, so that one and the same station of the assembly line can be adapted over time to operating on engines of a different type, or else the same basic scheme of cell can be used to provide different stations along the assembly line.

From the foregoing description, it is evident that the cell for automated assembly operations according to the present invention presents marked characteristics of operating flexibility, which enable it to be adopted as standard unit for setting up the various stations of a complete assembly line, as well as to be immediately adaptable to operating on components of different geometries, with the advantage that the assembly line remains substantially usable in the case of a change of production.

Of course, without prejudice to the principle of the invention, the details of construction and the embodiments may vary widely with respect to what is described and illustrated herein, purely by way of non-limiting example, without thereby departing from the scope of the present invention as defined in the claims.

## Claims

1. A cell for automated assembly operations, comprising a fixed supporting structure (2, 4, 6, 7 and 8) defining an assembly station (M), a conveying device (11, 12) defining a longitudinal direction (A) of conveyance, said conveying device being for feeding a piece into the assembly station (M) for the purpose of assembling thereon one or more accessory elements, and for sending the piece out of the assembly station (M), once the assembly operations are completed, means for referencing in position and supporting the piece in the assembly station (M), and manipulator means mounted mobile on the supporting structure (s) for the execution of the aforesaid assembly operations on the piece that is in the assembly station (M), wherein:
- the aforesaid means for referencing in position and clamping the piece in the assembly station (M) comprise a plate (B15), provided with reference elements (B16) that are to engage the pallet bearing said piece, said plate (B15) being raisable vertically to take up the pallet, setting it at a distance from the conveying device (11); and
- said raisable plate (B15) is carried by a slide (B13), which is mounted mobile in a direction parallel to the longitudinal direction (A)**,** said cell being **characterised in that** the aforesaid slide (B13) is mounted so that it can slide on a supporting structure (B2), which is in turn mounted oscillating about an axis parallel to the longitudinal direction (A) on a structure that is rigidly connected to the fixed frame of the cell.

2. The cell according to Claim 1, **characterized in that** the aforesaid oscillating structure (B2) is a box-like structure with end walls bearing ribbings shaped like the arc of a circle, which are slidably supported between two series of freely rotating rollers, carried by two end plates (B1), so that the box-like structure (B2) is mounted oscillating about the aforesaid longitudinal axis.

3. The cell according to Claim 2, **characterized in that** the angular position of the aforesaid oscillating structure is controlled by means of an electric motor and an external-screw/internal screw transmission, which governs the displacement of a lead nut (B8), fixed to a moving element (B9) bearing a groove (B10) for engaging a roller carried by a lever (B11), fixed to said box-like structure (B2).

4. The cell according to Claim 2, **characterized in that** the movement of the aforesaid slide (B13) is controlled by an electric motor, carried by the oscillating structure (B2) and connected to said slide by means of an external-screw/internal screw transmission.

5. The cell according to Claim 1, **characterized in that** said manipulator means are designed for simultaneous assembly of a plurality of elements on said piece and **in that** said manipulator means are adjustable for varying the distance between the positions at which said elements are mounted.

6. The assembly cell according to Claim 5, dedicated to the assembly of parts of multicylinder internal-combustion engines, **characterized in that** said manipulator means are designed for simultaneous assembly of elements associated to the different cylinders of the engine and are adjustable for operating on components of engines having different values of the distance between centres of the cylinders.

7. The cell according to Claim 5 or Claim 6, **characterized in that** it comprises a plurality of supporting plates (S5) for respective gripping members, said supporting plates (S5) being carried by the aforesaid mobile structure (S) and being positionable at different distances apart from one another.

8. The assembly cell according to Claim 5 or Claim 6, **characterized in that** said mobile structure (S) comprises a supporting structure including means for supporting a screw (S7) in rotation in a direction corresponding to the direction of distancing of the aforesaid plates (S5) for supporting the gripping members, **in that** said mobile structure (S) is provided with control means (S10, S9) for controlling rotation of said screw (S7), **in that** each of said plates (S5) is rigidly connected to a lead nut (S6) engaged by said screw, and **in that** said screw (S7) has portions with threads with different directions and/or pitches, so that a rotation of the screw brings about a simultaneous distancing of the aforesaid plates (S5), keeping at each instant said plates at equal distances apart from one another.

9. The assembly cell according to Claim 8, **characterized in that** said mobile structure (S) is carried by a vertically mobile slide (S3), which is mounted so that it can slide with respect to a further slide (S1), which is horizontally mobile on the fixed structure (8) of the cell (1) in a direction orthogonal to the direction of the conveying line (A).

10. The cell according to Claim 5 or Claim 6, **characterized in that** it comprises engagement members (R1) that are to engage simultaneously a number of parts of a piece or component that is in the assembly station, for example, for withholding provisionally in position the engine valves previously assembled on a cylinder head so as to prevent the valves from falling out of the cylinder head, and **in that** the aforesaid engagement members (R1) are carried by a supporting structure (R2) in such a way that they can be positioned at different distances apart from one another.

11. The cell according to Claim 10, **characterized in that** the aforesaid engagement members (R1) are carried at the ends of rocker arms (R10), which are mounted articulated on respective horizontal plates (R6) that can be positioned at different distances apart from one another.

12. The cell according to Claim 11, **characterized in that** the aforesaid plates (R6) are carried by a respective supporting structure (R4) by means of interposition of a screw (R7), which extends in the direction of reciprocal distancing of the aforesaid plates (R6) and which is supported in rotation by said supporting structure (R4), means (R8) being provided for imparting a rotation upon said screw, said plates (R6) being provided with respective lead nuts in engagement with said screw (R7), and said screw presenting portions with threads having different pitches and/or directions, so that a rotation of the screw brings about a distancing of the aforesaid plates (R6) from one another, keeping, however, at each instant said plates at equal distances apart from one another.

13. The cell according to Claim 12, **characterized in that** the aforesaid structure (R4) for supporting the plates that can be set at equal distances apart from one another (R6) is a bridge-like slide, mounted so that it can slide in a horizontal direction orthogonal to the direction of the conveying line (A) on a fixed structure (R2), rigidly connected to the fixed frame of the assembly cell.

14. The cell according to Claim 13, **characterized in that** the movement of the aforesaid bridge-like slide (R4) is controlled by an electric motor, carried by said fixed structure (R2) by means of an internal-screw/external-screw transmission.

15. The cell according to Claim 14, **characterized in that** said bridge-like slide (R4) carries a frame (R16), on which a cross member (R14) is vertically mobile, said frame being provided with control means (R18) for governing a lowering of said cross member (R14) in order to push said cross member against rear ends of the aforesaid rocker arms (R10) so as to bring about raising of the aforesaid engagement members (R1), carried at the front ends of said arms (R10).

## Patentansprüche

1. Zelle für automatisierte Montagevorgänge, wobei die Zelle enthält: eine ortsfeste Tragkonstruktion (2, 4, 6, 7 und 8), die eine Montagestation (M) bildet; eine Transporteinrichtung (11, 12), die eine Längsrichtung (A) für den Transport festlegt, wobei die Transporteinrichtung dazu vorgesehen ist, um ein Werkstück in die Montagestation (M) zu transportieren, um auf ihm dort ein oder mehrere Zubehörelemente zu montieren, und das Werkstück aus der Montagestation (M) zu führen, wenn die Montagevorgänge einmal beendet sind; Einrichtungen, um das Werkstück in der Montagestation (M) örtlich einzustellen und zu halten; sowie Manipulator-Einrichtungen, die auf der Tragkonstruktion (S) bewegbar angebracht sind, um die oben erwähnten Montagevorgänge auf dem Werkstück auszuführen, das sich in der Montagestation (M) befindet, wobei:
die Einrichtungen zum örtlichen Einstellen und Einspannen des Werkstücks in der Montagestation (M) eine Platte (B15) enthalten, die mit Bezugselementen (B16) versehen ist, die in die Palette eingreifen können, die das Werkstück trägt,
wobei die Platte (B15) vertikal angehoben werden kann, um die Palette aufzunehmen und sie in einem Abstand von der Transporteinrichtung (11) abzustellen; und
die anhebbare Platte (B15) von einem Schlitten (B13) getragen wird, der in Richtung parallel zur Längsrichtung (A) bewegbar ist, wobei die Zelle **dadurch gekennzeichnet ist, dass**
der Schlitten (B13) so angebracht ist, dass er auf einer Tragkonstruktion (B2) gleiten kann, die ihrerseits um eine Achse, die parallel zur Längsrichtung (A) verläuft, verschwenkbar an einer Konstruktion befestigt ist, die mit dem ortsfesten Chassis der Zelle starr verbunden ist.

2. Zelle gemäß Anspruch 1, **dadurch gekennzeichnet, dass** die Schwenkkonstruktion (B2) aus einer kastenartigen Konstruktion besteht, die Frontwände besitzt, die mit Rippungen versehen sind, die die Form eines Kreisbogens besitzen und zwischen zwei Reihen von freilaufenden Rollen aufgenommen werden, die auf zwei Frontplatten (B1) sitzen, so dass die kastenartige Konstruktion (B2) so befestigt ist, dass sie sich um die Längsachse verschwenken kann.

3. Zelle gemäß Anspruch 2, **dadurch gekennzeichnet, dass** die Winkelstellung der Schwenkkonstruktion mit Hilfe eines Elektromotors sowie einer Kraftübertragung mit einer Außengewindeschnecke und einem Muttergewinde gesteuert wird, die die Auslenkung einer Führungsmutter (B8) steuert, die an einem bewegbaren Element (B9) befestigt ist, das eine Rille (B10) trägt, um in eine Rolle einzugreifen, die auf einem Hebel (B11) sitzt, der an der kastenartigen Konstruktion (B2) befestigt ist.

4. Zelle gemäß Anspruch 2, **dadurch gekennzeichnet, dass** die Bewegung des Schlittens (B13) mit einem Elektromotor gesteuert wird, der auf der Schwenkkonstruktion (B2) sitzt und mit dem Schlitten über eine Kraftübertragung mit einer Außengewindeschnecke und einem Muttergewinde verbunden ist.

5. Zelle gemäß Anspruch 1, **dadurch gekennzeichnet, dass** die Manipulator-Einrichtungen so aufgebaut sind, dass sie gleichzeitig eine Vielzahl von Elementen auf dem Werkstück montieren können, und dass jede Manipulator-Einrichtung einstellbar ist, um den Abstand zwischen den Stellen zu verändern, an denen die Elemente montiert werden.

6. Montagezelle gemäß Anspruch 5, wobei die Zelle der Montage von Teilen von Mehrzylinder-Verbrennungsmotoren gewidmet ist, **dadurch gekennzeichnet, dass** die Manipulator-Einrichtungen so aufgebaut sind, dass sie gleichzeitig Elemente montieren können, die verschiedenen Zylindern des Motors zugeordnet sind, und dass sie einstellbar sind, um mit Bauelementen von Motoren zu arbeiten, die unterschiedliche Abstandswerte zwischen den Mittelpunkten der Zylinder besitzen.

7. Zelle gemäß Anspruch 5 oder Anspruch 6, **dadurch gekennzeichnet, dass** die Zelle eine Vielzahl von Tragplatten (S5) für die entsprechenden Greifelemente enthält, wobei die Tragplatten (S5) von der bewegbaren Konstruktion (S) getragen werden und in unterschiedlichen Abständen voneinander angeordnet werden können.

8. Montagezelle gemäß Anspruch 5 oder Anspruch 6, **dadurch gekennzeichnet, dass** die bewegbare Konstruktion (S) eine Tragkonstruktion enthält, die Einrichtungen aufweist, um eine Schnecke (S7) in einer Richtung drehbar aufzunehmen, die der Richtung der Beabstandung der Platten (S5) entspricht, die die Greifelemente tragen, und dass die bewegbare Konstruktion (S) mit Steuereinrichtungen (S10, S9) versehen ist, um die Drehung der Schnecke (S7) zu steuern, dass jede der Platten (S5) mit einer Führungsmutter (S6) starr verbunden ist, die mit der Schnecke in Eingriff steht, und dass die Schnecke (S7) Gewindeteile mit unterschiedlichen Richtungen und/oder Steigungen besitzt, so dass eine Drehung der Schnecke ein gleichzeitiges Beabstanden der Platten (S5) hervorruft, wobei die Platten in jedem Augenblick in gleichen Abständen voneinander gehalten werden.

9. Montagezelle gemäß Anspruch 8, **dadurch gekennzeichnet, dass** die bewegbare Konstruktion (S) von einem vertikal bewegbaren Schlitten (S3) getragen wird, der so angebracht ist, dass er gegenüber einem weiteren Schlitten (S1) gleiten kann, der auf der ortsfesten Konstruktion (8) der Zelle (1) in eine Richtung senkrecht zur Richtung der Transportstrecke (A) horizontal bewegt werden kann.

10. Zelle gemäß Anspruch 5 oder Anspruch 6, **dadurch gekennzeichnet, dass** die Zelle Eingreifelemente (R1) enthält, die gleichzeitig in eine Anzahl von Teilen eines Werkstücks oder Bauteils eingreifen, die sich in der Montagestation befinden, um beispielsweise die Motorventile, die auf einem Zylinderkopf vormontiert wurden, provisorisch in ihrer Stellung zurückzuhalten, um zu verhindern, dass die Ventile aus dem Zylinderkopf fallen, und dass die Eingreifelemente (R1) von einer Tragkonstruktion (R2) so gehalten werden, dass sie in unterschiedlichen Abständen voneinander angeordnet werden können.

11. Zelle gemäß Anspruch 10, **dadurch gekennzeichnet, dass** die Eingreifelemente (R1) an den Enden von Schwenkhebeln (R10) sitzen, die auf entsprechenden horizontalen Platten (R6) schwenkbar gelagert sind, die in unterschiedlichen Abständen voneinander angeordnet werden können.

12. Zelle gemäß Anspruch 11, **dadurch gekennzeichnet, dass** die Platten (R6) von einer entsprechenden Tragkonstruktion (R4) getragen werden, wobei dazwischen eine Schnecke (R7) angeordnet ist, die in die Richtung einer gegenseitigen Beabstandung der Platten (R6) verläuft und die in der Tragkonstruktion (R4) drehbar gelagert ist, wobei Einrichtungen (R8) vorgesehen sind, um der Schnecke eine Drehung aufzuprägen, wobei die Platten (R6) mit entsprechenden Führungsmuttern versehen sind, die mit der Schnecke (R7) in Eingriff stehen, und wobei die Schnecke Gewindeteile mit unterschiedlichen Steigungen und/oder Richtungen besitzt, so dass eine Drehung der Schnecke eine Beabstandung der Platten (R6) voneinander hervorbringt, wobei die Platten jedoch in jedem Augenblick in gleichen Abständen voneinander gehalten werden.

13. Zelle gemäß Anspruch 12, **dadurch gekennzeichnet, dass** die Konstruktion (R4), die die Platten (R6) trägt, die voneinander in gleichen Abständen angeordnet werden können, ein brückenartiger Schlitten ist, der so angebracht ist, dass er in horizontaler Richtung senkrecht zur Richtung der Transportstrecke (A) auf einer ortsfesten Konstruktion (R2) gleiten kann, die mit dem ortsfesten Chassis der Montagezelle starr verbunden ist.

14. Zelle gemäß Anspruch 13, **dadurch gekennzeichnet, dass** die Bewegung des brückenartigen Schlittens (R4) mit einem Elektromotor, der auf der ortsfesten Konstruktion (R2) sitzt, über eine Kraftübertragung mit einem Muttergewinde und einer Außengewindeschnecke gesteuert wird.

15. Zelle gemäß Anspruch 14, **dadurch gekennzeichnet, dass** der brückenartige Schlitten (R4) einen Rahmen (R16) trägt, auf dem ein Querelement (R14) vertikal bewegt werden kann, wobei der Rahmen mit Steuereinrichtungen (R18) versehen ist, um ein Absenken des Querelements (R14) zu steuern, um das Querelement gegen die Hinterenden der Schwenkarme (R10) zu drücken, um ein Anheben der Eingreifelemente (R1) hervorzurufen, die auf den Vorderenden der Arme (R10) sitzen.

## Revendications

1. Une cellule pour des opérations de montage automatisées, comprenant une structure support fixe (2, 4, 6, 7 et 8) définissant un poste de montage (M), un dispositif convoyeur (11, 12) définissant une direction longitudinale (A) de convoyage, ledit dispositif convoyeur servant à amener une pièce jusque dans le poste de montage (M) aux fins d'assemblage sur celle-ci d'un ou plusieurs éléments accessoires, et pour évacuer la pièce hors du poste de montage (M), une fois les opérations de montage achevées, des moyens pour référencer en position et supporter la pièce dans le poste d'assemblage (M), et des moyens manipulateurs montés mobiles sur la structure support (S) pour l'exécution des opérations de montage précitées sur la pièce qui se trouve dans le poste de montage (M), dans laquelle :
- les moyens précités pour référencer en position et pincer la pièce dans le poste de montage (M) comprennent une plaque (B15), pourvue d'éléments de référence (B16) qui doivent venir en prise avec la palette supportant ladite pièce, ladite plaque (B15) étant relevable verticalement pour saisir la palette, en la positionnant à une certaine distance du dispositif de convoyage (11) ; et
- ladite plaque relevable (B15) est portée par un coulisseau (B13) qui est monté mobile dans une direction parallèle à la direction longitudinale (A),
ladite cellule étant **caractérisée en ce que** le coulisseau précité (B13) est monté de manière qu'il puisse coulisser sur une structure support (B2), qui est à son tour montée oscillante autour d'un axe parallèle à la direction longitudinale (A) sur une structure qui est rigidement solidarisée au châssis fixe de la cellule.

2. La cellule selon la revendication 1, **caractérisée en ce que** la structure oscillante précitée (B2) est une structure de type boîte avec des parois d'extrémité portant des nervurages conformés à la manière d'un arc de cercle, qui sont supportées de manière coulissante entre deux séries de rouleaux pouvant tourner librement, portés par deux plaques d'extrémité fixes (B1), de sorte que la structure de type boîte (B2) soit montée oscillante autour de l'axe longitudinal précité.

3. La cellule selon la revendication 2, **caractérisée en ce que** la position angulaire de la structure oscillante précitée est contrôlée au moyen d'un moteur électrique et d'une transmission vis-externe/vis-interne, qui commande le déplacement d'un écrou d'entraînement (B8), fixé à un élément mobile (B9) portant une gorge (B10) pour venir en prise avec un rouleau porté par un levier (B11), fixé à ladite structure de type boîte (B2).

4. La cellule selon la revendication 2, **caractérisée en ce que** le mouvement du coulisseau précité (B13) est contrôlé par un moteur électrique, porté par la structure oscillante (B2) et reliée audit coulisseau par des moyens de transmission vis-externe/vis-interne.

5. La cellule selon la revendication 2, **caractérisée en ce que** lesdits moyens manipulateurs sont conçus pour le montage simultané d'une pluralité d'éléments sur ladite pièce et **en ce que** lesdits moyens manipulateurs sont ajustables pour faire varier la distance entre les positions desdits éléments,

6. La cellule selon la revendication 2, dédiée au montage de parties de moteurs à combustion interne à plusieurs cylindres, **caractérisée en ce que** lesdits moyens manipulateurs sont conçus pour le montage simultané d'éléments associés aux divers cylindres du moteur et sont ajustables pour opérer sur des composants de moteur ayant des valeurs différentes de la distance entre les centres des cylindres.

7. La cellule selon la revendication 5 ou la revendication 6, **caractérisée en ce qu'**elle comprend une pluralité de plaques support (S5) pour des organes de saisie respectifs, lesdites plaques support (S5) étant portées par la structure mobile précitée (S) et pouvant être positionnés à des distances différentes les uns des autres.

8. La cellule de montage selon la revendication 5 ou la revendication 6, **caractérisée en ce que** ladite structure mobile (S) comprend une structure support incluant des moyens pour supporter une vis (S7) en rotation dans un sens correspondant au sens d'éloignement des plaques précitées (S5) pour supporter les organes de saisie, **en ce que** ladite structure mobile (S) est pourvue de moyens de contrôle (S10, S9) pour contrôler la rotation de ladite vis (S7), **en ce que** chacune desdites plaques (S5) est rigidement solidarisée à un écrou d'entraînement (S6) venant en prise avec ladite vis, et **en ce que** ladite vis (S7) possède des parties avec des filets présentant des sens et/ou des pas différents de manière qu'une rotation de la vis produise un éloignement simultané des plaques précitées (S5), en maintenant à chaque instant lesdites plaques à des distances égales les unes par rapport aux autres.

9. La cellule de montage selon la revendication 8, **caractérisée en ce que** ladite structure mobile (S) est portée par un coulisseau mobile verticalement (S3), qui est monté de manière à pouvoir coulisser par rapport à un autre coulisseau (S1), qui est mobile horizontalement sur la structure fixe (8) de la cellule (1) dans une direction orthogonale à la direction de la ligne de convoyage (A).

10. La cellule selon la revendication 5 ou la revendication 6, **caractérisée en ce qu'**elle comprend des organes d'engagement (R1) qui doivent s'engager simultanément avec un certain nombre de parties d'une pièce ou composant qui se trouve dans le poste de montage, par exemple pour maintenir provisoirement en position les soupapes moteur préalablement assemblées sur une culasse de manière à empêcher les soupapes de tomber de la culasse, et **en ce que** les organes d'engagement précités (R1) sont portés par une structure support (R2) d'une manière telle qu'ils puissent être positionnés à des distances différentes les uns par rapport aux autres.

11. La cellule selon la revendication 10, **caractérisée en ce que** les organes d'engagement précités (R1) sont portés aux extrémités de bras basculants (R10), qui sont montés articulés sur des plaques horizontales respectives (R6) qui peuvent être positionnées à des distances différentes les unes par rapport aux autres.

12. La cellule selon la revendication 11, **caractérisée en ce que** les plaques précitées (R6) sont portées par une structure support respective (R4) au moyen de l'interposition d'une vis (R7), qui s'étend dans la direction d'éloignement réciproque des plaques précitées (R6) et qui est supportée en rotation par ladite structure support (R4), des moyens (R8) étant prévus pour appliquer une rotation à ladite vis, lesdites plaques (R6) étant pourvues d'écrous d'entraînement respectifs en prise avec ladite vis (R7), et ladite vis présentant des portions avec des filets ayant des pas et/ou des sens différents, de sorte qu'une rotation de la vis produise un éloignement des plaques précitées (R6) l'une par rapport à l'autre, en gardant, cependant, à chaque instant lesdites plaques à des distances égales les unes par rapport aux autres.

13. La cellule selon la revendication 12, **caractérisée en ce que** la structure précitée (R4) pour supporter les plaques qui peuvent être positionnées à égale distance les unes des autres (R6) est un coulisseau en forme de pont, monté de manière qu'il puisse coulisser suivant une direction horizontale orthogonale à la direction de la ligne de convoyage (A) sur une structure fixe (R2), rigidement solidarisée au châssis fixe de la cellule de montage.

14. La cellule selon la revendication 13, **caractérisée en ce que** le déplacement du coulisseau en forme de pont précité (R4) est contrôlé par un moteur électrique, porté par ladite structure fixe (R2) au moyen d'une transmission vis-interne/vis-externe.

15. La cellule selon la revendication 14, **caractérisée en ce que** ledit coulisseau en forme de pont (R4) porte un châssis (R16), sur lequel un organe transversal (R14) est mobile verticalement, ledit châssis étant pourvu de moyens de contrôle (R18) pour commander un abaissement dudit organe transversal (R14) afin de pousser ledit organe transversal contre les extrémités arrière des bras oscillants précités (R10) afin de produire l'élévation des organes d'engagement précités (R1), supportés aux extrémités avant desdits bras (R10).
